# EUROPEAN PATENT APPLICATION

(11) **EP 4 516 365 A1**
(43) Date of publication of application: **05.03.2025**
(21) Application number: 24197412.0
(22) Date of filing: 29.08.2024
(51) Int. Cl.: A62C 3/08, A62C 99/00

(54) **AIRCRAFT FIRE SUPPRESSION SYSTEM**

(30) Priority: 29.08.2023 US 202318239423
(71) Applicant: Kidde Technologies, Inc., Wilson, NC 27896 (US)
(72) Inventor: ROGERS, Aaron S., Surf City, 28445 (US); SEEBALUCK, Len D., Wake Forest, 27587 (US)
(74) Representative: Dehns

(57) **Abstract**

A system (10) for extinguishing and suppressing a fire in an aircraft includes a precooler (12), a heat exchanger (14), a condenser (18), a gas separator (20), and an accumulator (22). The precooler (12) is configured to receive a bleed air from an engine (11) of the aircraft. The heat exchanger (14) is fluidly coupled with the precooler (12). The condenser (18) is configured to receive a cabin exhaust air from a passenger cabin (16) of the aircraft. The gas separator (20) is fluidly coupled with the condenser (18) and is fluidly coupled with the heat exchanger (14). The gas separator (20) is configured to generate a fire suppressing agent from the bleed air and the cabin exhaust air. The accumulator (22) is fluidly coupled with the gas separator (20) and configured to receive the fire suppressing agent.

## Description

### BACKGROUND

The present invention relates to a fire suppression system, and in particular, to a fire suppression system for an aircraft.

Fire protection is needed on aircraft. Laws and regulations require that all new designs of aircraft and existing in-service aircraft have dedicated systems for fire extinguishing and suppression. There is increasing pressure from both regulators and the public for airliners to be environmentally friendly. For these reasons, there is a high demand for environmentally clean fire suppression systems.

Fire extinguishing and suppression systems for aircraft cargo bays traditionally use an environmentally unclean fire suppressing agent; most notably, halons. Halons have been banned by the Montreal Protocol and since 1994, the import and production of virgin halons have been banned in the United States.

Fire extinguishing and suppression systems for aircraft cargo bays traditionally comprise a high-rate of discharge (HRD) bottle and a low-rate of discharge (LRD) bottle. The HRD bottle reacts to a fire by knocking it down and quickly extinguishing the flames with a high volume of fire suppressing agent, while the LRD bottle operates after the fire and keeps the oxygen content of the cargo bay low, preventing further fires. In an effort to remain environmentally clean, some modern fire extinguishing and suppression systems use concentrated nitrogen obtained from the air as a fire suppressing agent.

### SUMMARY

According to an aspect of the present invention, there is provided a system for extinguishing and suppressing a fire in an aircraft includes a precooler, a heat exchanger, a condenser, a gas separator, and an accumulator. The precooler is configured to receive bleed air from an engine of the aircraft. The heat exchanger is fluidly coupled with the precooler. The condenser is configured to receive cabin exhaust air from a passenger cabin of the aircraft. The gas separator is fluidly coupled with the condenser and is fluidly coupled with the heat exchanger. The gas separator is configured to generate a fire suppressing agent from the bleed air and cabin exhaust air. The accumulator is fluidly coupled with the gas separator. The accumulator is configured to receive and store the fire suppressing agent.

According to another aspect of the present invention, there is provided a system for extinguishing and suppressing a fire in an aircraft includes a first fluid flow path, a second fluid flow path, a third fluid flow path, and a fourth fluid flow path. The first fluid flow path is configured to receive bleed air from the aircraft. The first fluid flow path extends through a precooler, and ends at a first valve. The second fluid flow path is configured to receive cabin exhaust air from a passenger cabin of the aircraft. The second fluid flow path extends through a condenser and ends at a second valve. The third fluid flow path has a first branch extending from the first valve and through the heat exchanger and a second branch extending from the second valve. The third fluid flow path further extends through a gas separator into an accumulator, and ends at a third valve. The fourth fluid flow path extends from the third valve.

According to another aspect of the present invention, there is provided a method for extinguishing and suppressing a fire in an aircraft includes receiving bleed air from the aircraft. The bleed air is cooled with a precooler. Cabin exhaust air is received from a passenger cabin of the aircraft, and the cabin exhaust air is condensed with a condenser. The bleed air and cabin exhaust air flow into a gas separator. An inert gas and a water mist are separated from the bleed air and cabin exhaust air using the gas separator. The inert gas and the water mist flow into an accumulator.

Features of embodiments are outlined in the dependent claims.

### BRIEF DESCRIPTION OF THE DRAWINGS

FIG. 1 is a schematic of an aircraft fire suppression system.
FIG. 2 is a schematic of the aircraft fire suppression system of FIG. 1 showing air flow paths through the aircraft fire suppression system.

### DETAILED DESCRIPTION

An aircraft fire suppression system is disclosed that includes a precooler, a heat exchanger, a condenser, a gas separator, and an accumulator. These components are connected via a system of ducts and valves. The operation of the valves is controlled by a controller. The controller responds to signals generated by a signal source, for example internal system sensors. The aircraft fire suppression system extracts carbon dioxide and water mist from bleed air and cabin exhaust air and stores the carbon dioxide and water mist in the accumulator. When a fire is detected in a cargo bay of the aircraft, the aircraft fire suppression system can dispense the carbon dioxide and water mist from the accumulator into the cargo bay to extinguish or suppress the fire. Further, the aircraft fire suppression system can continue to extract carbon dioxide and water mist from the bleed air and cabin exhaust air and continually deliver it to the cargo bay after a fire has been suppressed to inert the cargo bay atmosphere.

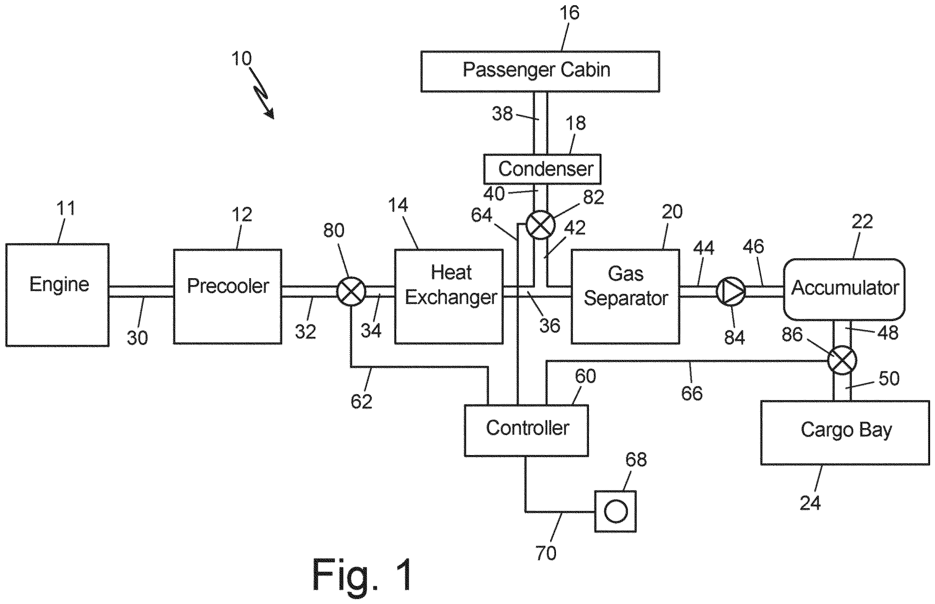

FIG. 1 is a schematic of aircraft fire suppression system 10. FIG. 1 shows aircraft fire suppression system 10, engine 11, passenger cabin 16, and cargo bay 24. Aircraft fire suppression system 10 includes precooler 12, heat exchanger 14, condenser 18, gas separator 20, and accumulator 22. Aircraft fire suppression system 10 also includes duct 30, duct 32, duct 34, duct 36, duct 38, duct 40, duct 42, duct 44, duct 46, duct 48, and duct 50. Aircraft fire suppression system 10 further includes controller 60, connection 62, connection 64, connection 66, signal source 68, connection 70, first valve 80, second valve 82, check valve 84, and third valve 86.

Aircraft fire suppression system 10 is fluidly coupled to engine 11, which can be an aircraft engine. Bleed air is received from engine 11 and delivered to precooler 12 and then heat exchanger 14 of aircraft fire suppression system 10. Aircraft fire suppression system 10 is also fluidly coupled to passenger cabin 16, which can be a passenger cabin of the aircraft. Cabin exhaust air is received from passenger cabin 16 and delivered to condenser 18 of aircraft fire suppression system 10. The bleed air from engine 11 and the cabin exhaust air from passenger cabin 16 are mixed together and delivered to gas separator 20 and accumulator 22 of aircraft fire suppression system 10. Accumulator 22 of aircraft fire suppression system 10 is fluidly coupled to cargo bay 24, which can be a cargo bay of the aircraft.

Aircraft fire suppression system 10 is connected to engine 11. Engine 11 creates bleed air that can flow to aircraft fire suppression system 10. Engine 11 is connected to precooler 12 via duct 30. Precooler 12 receives the bleed air from engine 11 and cools the bleed air. Precooler 12 is connected to first valve 80 via duct 32. First valve 80 is connected to heat exchanger 14 via duct 34. Heat exchanger 14 receives the bleed air from the precooler and further cools the bleed air and scrubs the bleed air of particles. Heat exchanger 14 is connected to gas separator 20 via duct 36.

Precooler 12 is fluidly coupled with engine 11 through a fluid flow path, for example duct 30. Heat exchanger 14 is fluidly coupled with precooler 12 through a fluid flow path, for example duct 32 and duct 34. First valve 80 is positioned in the fluid flow path between precooler 12 and heat exchanger 14. If first valve 80 is open, fluid can flow through first valve 80. If first valve 80 is closed, fluid cannot flow through first valve 80. Heat exchanger 14 is fluidly coupled with gas separator 20 through a fluid flow path, for example duct 36. Passenger cabin 16 is fluidly coupled with condenser 18 through a fluid flow path, for example duct 38. Condenser 18 is fluidly coupled with gas separator 20 through a fluid flow path, for example duct 40, duct 42, and duct 36. Second valve 82 is positioned in the fluid flow path between condenser 18 and gas separator 20. If second valve 82 is open, fluid can flow through second valve 82. If second valve 82 is closed, fluid cannot flow through second valve 82. Gas separator 20 is fluidly coupled with accumulator 22 through a fluid flow path, for example duct 44 and duct 46. Check valve 84 is positioned in the fluid flow path between gas separator 20 and accumulator 22. Fluid can flow from duct 44 to duct 46 through check valve 84. Fluid cannot flow from duct 46 to duct 44 through check valve 84. Accumulator 22 is fluidly coupled with cargo bay 24 through a fluid flow path, for example duct 48 and duct 50. Third valve 86 is positioned in the fluid flow path between accumulator 22 and cargo bay 24. If third valve 86 is open, fluid can flow through third valve 86. If third valve 86 is closed, fluid cannot flow through third valve 86.

More specifically, in the embodiment shown in FIG. 1, aircraft fire suppression system 10 is connected to passenger cabin 16. Passenger cabin 16 contains cabin exhaust air. Passenger cabin 16 is connected to condenser 18 via duct 38. Condenser 18 is connected to second valve 82 via duct 40. Condenser 18 receives the cabin exhaust air from passenger cabin 16 and condenses the cabin exhaust air. Second valve 82 is connected to gas separator 20 via duct 42 and duct 36. Duct 42 connects to duct 36. The bleed air and the cabin exhaust air both flow into duct 36 to flow into gas separator 20.

Gas separator 20 is connected to check valve 84 via duct 44. Gas separator 20 receives the bleed air and the cabin exhaust air and provides a fire suppressing agent. Check valve 84 is connected to accumulator 22 via duct 46. Accumulator 22 holds the fire suppressing agent created by gas separator 20. Accumulator 22 is connected to third valve 86 via duct 48. Third valve 86 is connected to cargo bay 24 via duct 50.

Controller 60 can be located in any suitable location on the aircraft. First valve 80 is electrically coupled with controller 60 via connection 62. Second valve 82 is electrically coupled with controller 60 via connection 64. Third valve 86 is electrically coupled with controller 60 via connection 66. Controller 60 is electrically coupled with signal source 68 via connection 70. Signal source 68 may be, for example, a fire alarm or a mechanism in the cockpit of the aircraft. Alternatively, signal source 68 can be any suitable internal system sensor or a plurality of internal system sensors. Secondary sensors can be used. The internal system sensor or the plurality of internal system sensors can use smoke, temperature, optical signatures, or any other suitable input to detect a fire in cargo bay 24.

Duct 30, duct 32, duct 34, duct 36, duct 38, duct 40, duct 42, duct 44, duct 46, duct 48, and duct 50 can have any suitable shape, size, or configuration. Duct 30, duct 32, duct 34, duct 36, duct 38, duct 40, duct 42, duct 44, duct 46, duct 48, and duct 50 are intended to be examples of fluid connections in aircraft fire suppression system 10 and be any suitable component in alternate embodiments.

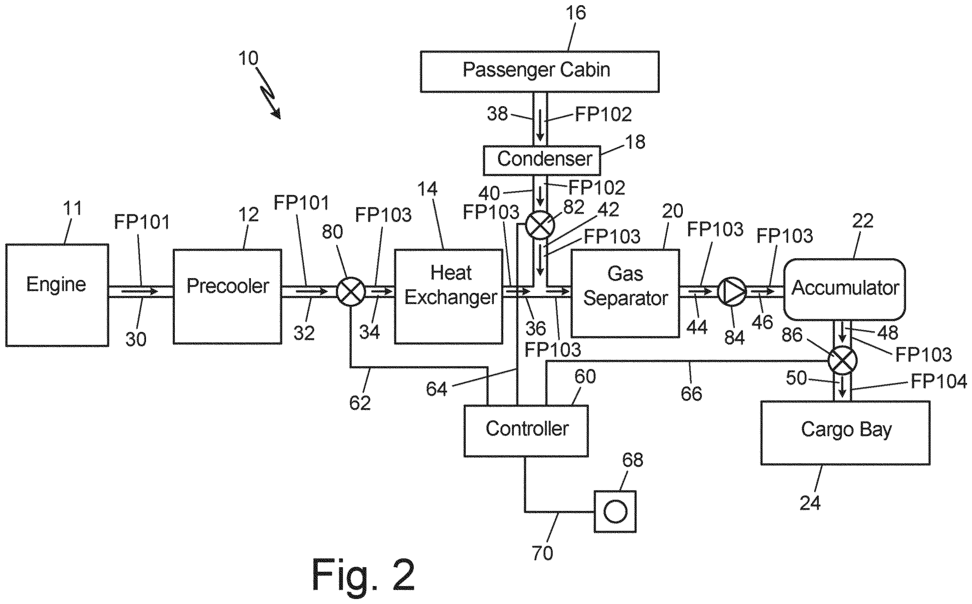

FIG. 2 is a schematic of aircraft fire suppression system 10 of FIG. 1 showing air flow paths through aircraft fire suppression system 10. FIG. 2 shows aircraft fire suppression system 10, engine 11, passenger cabin 16, and cargo bay 24. Aircraft fire suppression system 10 includes precooler 12, heat exchanger 14, condenser 18, gas separator 20, and accumulator 22. Aircraft fire suppression system 10 also includes duct 30, duct 32, duct 34, duct 36, duct 38, duct 40, duct 42, duct 44, duct 46, duct 48, and duct 50. Aircraft fire suppression system 10 further includes controller 60, connection 62, connection 64, connection 66, signal source 68, connection 70, first valve 80, second valve 82, check valve 84, and third valve 86. FIG. 2 further shows first flow path FP101, second fluid flow path FP102, third fluid flow path FP103, and fourth fluid flow path FP 104.

FIG. 2 shows aircraft fire suppression system 10 as described above in reference to FIG. 1. FIG. 2 further shows fluid flow paths through aircraft fire suppression system 10 to aid in the description of the function of aircraft fire suppression system 10.

First fluid flow path FP101 is shown with arrows labeled FP101 in FIG. 2. First fluid flow path FP101 begins at engine 11, extends through duct 30, precooler 12, and duct 32, and ends at first valve 80. First fluid flow path FP101 is configured to receive bleed air from engine 11.

Second fluid flow path FP102 is shown with arrows labeled FP102 in FIG. 2. Second fluid flow path FP102 beings at passenger cabin 16, extends through duct 38, condenser 18, and duct 40, and ends at second valve 82. Second fluid flow path FP102 is configured to receive cabin exhaust air from passenger cabin 16.

Third fluid flow path FP103 is shown with arrows labeled FP103 in FIG. 2. A first branch of third fluid flow path FP103 begins at first valve 80, extends through duct 34 and heat exchanger 14, and into duct 36. A second branch of third fluid flow path FP103 begins at second valve 82, extends through duct 42, and into duct 36. From duct 36, third fluid flow path extends through duct 36, gas separator 20, duct 44, check valve 84, duct 46, and into accumulator 22. Third fluid flow path FP103 is configured to receive fluid from both first fluid flow path FP101 and second fluid flow path FP102.

Fourth fluid flow path FP104 is shown with arrows labeled FP104 in FIG. 2. Fourth fluid flow path FP104 beings at accumulator 22, extends through duct 48, third valve 86, and duct 50, and into cargo bay 24. Fourth fluid flow path FP104 is configured to dispense the fire suppressing agent to cargo bay 24.

Different operating modes of the aircraft fire suppression system 10 are described below with reference to FIGS. 1-2. The operation of aircraft fire suppression system 10 is controlled by controller 60, which opens and closes valves to put aircraft fire suppression system 10 into a charging mode, an open suppression mode, a closed suppression mode, or an idle mode. Signal source 68 creates a signal that is relayed to controller 60 via connection 70. In one embodiment, signal source 68 considers the status of aircraft fire suppression system 10, in particular the charge level of accumulator 22, and the status of cargo bay 24, in particular the presence of a fire. In a first embodiment, signal source 68 sends a charging signal, an open suppression signal, a closed suppression signal, or an idle signal to controller 60 based on the status of aircraft fire suppression system 10 and cargo bay 24. Controller 60 then acts accordingly as described below. In a second embodiment, signal source 68 generates a signal which tells controller 60 the status of the aircraft fire suppression system 10 and cargo bay 24, and controller 60 determines the mode of aircraft fire suppression system 10. Signal source 68 and controller 60 are shown as being two separate components in FIGS. 1-2. Signal source 68 and controller 60 can be integrally formed as a single component in an alternate embodiment. Signal source 68 is, for example, a microprocessor, a microcontroller, or a computer.

Aircraft fire suppression system 10 must be charged before use. Preferably, aircraft fire suppression system 10 would be charged before the aircraft takes off, while the aircraft is performing preflight operations on the ground. Aircraft fire suppression system 10 in charging mode is now described. In response to a low charge level in accumulator 22 or an input from the cockpit, signal source 68 sends a charging signal to controller 60, which tells controller 60 to open first valve 80 and second valve 82, and close third valve 86. In response to the charging signal, controller 60 opens first valve 80 and second valve 82, but closes third valve 86. In the charging mode, first valve 80 is open, second valve 82 is open, and third valve 86 is closed. This configuration allows fluid to flow through first fluid flow path FP101, second fluid flow path FP102, and third fluid flow path FP103. This configuration does not allow fluids to flow through fourth fluid flow path FP104.

While aircraft engine 11 is running, bleed air is generated from, for example, the exhaust portion of the engine. The bleed air comprises combusted fuel, which comprises, for example, carbon monoxide (CO), nitrogen oxides (NOx), nitrogen, carbon dioxide, water vapor, and/or particulate matter. The bleed air is pressurized and at a high temperature, so it needs to be cooled down before it can be used. The bleed air flows from aircraft engine 11, through duct 30, and into precooler 12. Precooler 12 cools the bleed air. Precooler 12 may comprise, for example, a dedicated precooling device, a length of duct that can withstand the heat of the bleed air, or any other suitable configuration. The bleed air is cooled down to a temperature where it can safely be processed by heat exchanger 14.

After undergoing cooling in precooler 12, the bleed air flows from precooler 12, through duct 32, and into the open first valve 80. First valve 80 may be, for example, a control valve or an on-off valve. The bleed air then flows from first valve 80, through duct 34, and into heat exchanger 14. Heat exchanger 14 serves two purposes: it further cools the bleed air to a usable level, and it scrubs particulate matter from the bleed air. Alternatively, scrubbing may be performed by a standalone device. The bleed air then flows from heat exchanger 14 and into duct 36.

Aircraft fire suppression system 10 receives cabin exhaust air from passenger cabin 16. The cabin exhaust air is pressurized. The cabin exhaust air comprises oxygen, nitrogen, carbon dioxide, and/or water vapor. The cabin exhaust air flows from passenger cabin 16, through duct 38 and into condenser 18. Condenser 18 receives the cabin exhaust air and provides a combination of cabin exhaust air that has been moistened. Condenser 18 condenses the water vapor in the cabin exhaust air into water mist to generate a moist cabin exhaust air. The cabin exhaust air flows from condenser 18, through duct 40, and into second valve 82. Second valve 82 may be, for example, a control valve or an on-off valve. The cabin exhaust air then flows from second valve 82, through duct 42, and into duct 36. The bleed air mixes with the cabin exhaust air in duct 36.

The bleed air and the cabin exhaust air then flow from duct 36 into gas separator 20. Gas separator 20 receives the bleed air and the cabin exhaust air and provides a fire suppressing agent. Gas separator 20 serves two functions. Gas separator 20 separates the carbon dioxide and the water mist from the bleed air and the cabin exhaust air, which has been moistened by condenser 18, from the unwanted gases in the bleed air and the cabin exhaust air using a series of gas separation channels. The bleed air and the cabin exhaust air, which together comprise carbon monoxide, nitrogen oxides, nitrogen, carbon dioxide, water vapor, particulate matter, oxygen, and/or water mist, are separated and yield carbon dioxide and the water mist. The fire suppressing agent comprises the carbon dioxide and the water mist. The separation process could be achieved using mechanical means, such as membrane gas separation technology (osmosis), or a chemical catalyst reaction system, whereby a sacrificial chemical is used to react with, extract, and/or absorb the unwanted gases. In another example, a hybrid system using both mechanical means, such as membrane gas separation technology (osmosis), and chemical means, such as a sacrificial chemical being used to react with, extract, and/or absorb the undesired gases, is used. Gas separator 20 also releases overboard or otherwise processes the unwanted gases from the bleed air and/or the cabin exhaust air.

The fire suppressing agent then flows from gas separator 20, through duct 44, check valve 84, and duct 46, and into accumulator 22. Check valve 84 allows fluids to flow from gas separator 20 to accumulator 22 but does not allow fluids to flow from accumulator 22 to gas separator 20. Check valve 84 allows fluids to flow from duct 44 to duct 46 but does not allow fluids to flow from duct 46 to duct 44. Accumulator 22 is pressurized and is configured to receive and contain the fire suppressing agent. Duct 48 is also pressurized and is configured to receive and contain the fire suppressing agent. Third valve 86 is closed in the charging mode and prevents the fire suppressing agent from flowing from accumulator 22 and duct 48, through third valve 86, through duct 50, and into cargo bay 24 while it is closed.

Aircraft fire suppression system 10 in idle mode is now described. In response to detecting an adequate charge in accumulator 22 or an input from the cockpit, signal source 68 generates an idle signal, which tells controller 60 to close first valve 80, second valve 82, and third valve 86. In response to the idle signal, controller 60 closes first valve 80, second valve 82, and third valve 86. In idle mode, first valve 80, second valve 82, and third valve 86 are closed. This configuration does not allow fluids to flow through third fluid flow path FP103 or fourth fluid flow path FP104. Further, fluid will not flow through first fluid flow path FP101 and second fluid flow path FP102, but static pressurized air will exist in first fluid flow path FP101 and second fluid flow path FP102.

In the idle mode, the bleed air can enter into aircraft fire suppression system 10, but is prevented from flowing past first valve 80. The bleed air can flow through aircraft fire suppression system 10 up to first valve 80 as described above with respect to the charging mode. However, when aircraft fire suppression system 10 is in the idle mode, the bleed air cannot flow between duct 32 and duct 34 because first valve 80 is closed.

In the idle mode, the cabin exhaust air can enter into aircraft fire suppression system 10, but is prevented from flowing past second valve 82. The cabin exhaust air can flow through aircraft fire suppression system 10 up to second valve 82 as described above with respect to the charging mode. However, when aircraft fire suppression system 10 is in the idle mode, the cabin exhaust air cannot flow between duct 40 and duct 42 because second valve 82 is closed. Further, third valve 86 prevents the fire suppressing agent from flowing from duct 48, through third valve 86, through duct 50, and into cargo bay 24 while it is closed.

Aircraft fire suppression system 10 in open suppression mode is now described. In response to a fire or an input from the cockpit, signal source 68 generates an open suppression signal, which tells controller 60 to open first valve 80, second valve 82, and third valve 86. In response to the open suppression signal, controller 60 opens first valve 80, second valve 82, and third valve 86. In the open suppression mode, first valve 80, second valve 82, and third valve 86 are open. This configuration allows fluid to flow through first fluid flow path FP101, second fluid flow path FP102, third fluid flow path FP103, and fourth fluid flow path FP104.

In the open suppression mode, the bleed air can flow from engine 11 through aircraft fire suppression system 10 to gas separator 20, where carbon dioxide and water mist are extracted from the bleed air to generate the fire suppressing agent that flows to accumulator 22. The bleed air and the fire suppressing agent flow through aircraft fire suppression system 10 up to third valve 86 are described above with respect to the charging mode.

In the open suppression mode, the cabin exhaust air can also flow from passenger cabin 16 through aircraft fire suppression system 10 to gas separator 20, where carbon dioxide and water mist are extracted from the cabin exhaust air, and any water mist generated by condenser 18, to generate the fire suppressing agent that flows to accumulator 22. The cabin exhaust air, the water mist generated by condenser 18, and the fire suppressing agent flow through aircraft fire suppression system 10 up to third valve 86 are described above with respect to the charging mode. In the open suppression mode, controller 60 opens third valve 86 in response to a signal from signal source 68. The fire suppressing agent is pressurized and when third valve 86 opens, the fire suppressing agent flows from accumulator 22 and duct 48, through third valve 86 and duct 50, and into cargo bay 24. The fire suppressing agent entering into cargo bay 24 from accumulator 22 is configured to extinguish a fire in cargo bay 24. The production of new fire suppressing agent from the bleed air and the cabin exhaust air continues in the open suppression mode, and as new fire suppressing agent is created, it enters accumulator 22, flows through duct 48, the open third valve 86, and duct 50, and into cargo bay 24. Thus, even after the initial quantity of fire suppressing agent created from the charging mode is used, new fire suppressing agent is still created, so long as aircraft engine 11 is running and sourcing bleed air.

Aircraft fire suppression system 10 in closed suppression mode is now described. In response to a fire or an input from the cockpit, signal source 68 generates a closed suppression signal, which tells controller 60 to close first valve 80 and second valve 82, and open third valve 86. In response to the closed suppression signal, controller 60 closes first valve 80 and second valve 82, and opens third valve 86. In closed suppression mode, first valve 80 is closed, second valve 82 is closed, and third valve 86 is open. This configuration allows fluid to flow through fourth fluid flow path FP104.

In the closed suppression mode, the bleed air can enter into aircraft fire suppression system 10, but is prevented from flowing past first valve 80. The bleed air can flow through aircraft fire suppression system 10 up to first valve 80 as described above with respect to the charging mode. However, when aircraft fire suppression system 10 is in the closed suppression mode, the bleed air does not progress past first valve 80.

In the closed suppression mode, the cabin exhaust air can enter into aircraft fire suppression system 10, but is prevented from flowing past second valve 82. The cabin exhaust air can flow through aircraft fire suppression system 10 up to second valve 82 as described above with respect to the charging mode. However, when aircraft fire suppression system 10 is in the closed suppression mode, the cabin exhaust air does not progress beyond second valve 82.

In the closed suppression mode, controller 60 opens third valve 86 in response to a signal from signal source 68. The fire suppressing agent is pressurized and when third valve 86 opens, the fire suppressing agent flows from accumulator 22 and duct 48, through third valve 86 and duct 50, and into cargo bay 24. The fire suppressing agent entering into cargo bay 24 from accumulator 22 is configured to extinguish a fire in cargo bay 24. In the closed suppression mode, no new fire suppressing agent is created due to first valve 80 and second valve 82 being closed.

Aircraft fire suppression system 10 presents many advantages over traditional fire suppression systems. One advantage of aircraft fire suppression system 10 is that there is a limitless supply of fire suppressing agent to be delivered to cargo bay 24 when fire suppression system 10 is operating in the open suppression mode. So long as engine 11 continues to run and the cabin exhaust air recirculator continues to function, aircraft fire suppression system 10 will be able to continuously produce the fire suppressing agent using only the byproducts of normal aviation flight.

Additionally, the fire suppressing agent produced by aircraft fire suppression system 10 is environmentally clean and emits only byproducts of normal aviation flight. The Montreal protocol has banned halons and since 1994, the import and production of virgin halons has been banned in the United States. This has created a need for environmentally clean fire suppressing agents. In comparison, aircraft fire suppression system 10 extracts carbon dioxide and water mist from the bleed air and the cabin exhaust air and uses the carbon dioxide and the water mist for extinguishing and suppressing fires.

Aircraft fire suppression system 10 is much more reliable than current nitrogen generation systems because aircraft fire suppression system 10 does not rely upon pumps for the pneumatic pressure necessary to charge the accumulator. The pneumatic pressure is from engine 11 itself. Additionally, unlike current nitrogen generation systems, the bleed air entering the gas separator is pre-heated. This helps avoid efficiency delays upon startup. This is especially helpful because in an example of aircraft fire suppression system 10, the charging mode is initiated and performed during preflight operations on the ground. The replacement of the osmosis membrane or the chemical plate can coincide and align with the current replacement intervals for air conditioning system HEPA filters, increasing the convenience of maintenance for aircraft fire suppression system 10.

### Discussion of Possible Embodiments

The following are non-exclusive descriptions of possible embodiments of the present invention.

A system for extinguishing and suppressing a fire in an aircraft includes a precooler, a heat exchanger, a condenser, a gas separator, and an accumulator. The precooler is configured to receive a bleed air from an engine of the aircraft. The heat exchanger is fluidly coupled with the precooler. The condenser is configured to receive a cabin exhaust air from a passenger cabin of the aircraft. The gas separator is fluidly coupled with the condenser and is fluidly coupled with the heat exchanger. The gas separator is configured to generate a fire suppressing agent from the bleed air and the cabin exhaust air. The accumulator is fluidly coupled with the gas separator. The accumulator is configured to receive and store the fire suppressing agent.

The system of the preceding paragraph can optionally include, additionally and/or alternatively, any one or more of the following features, configurations and/or additional components:
The system further includes a first valve positioned in a first fluid flow path between the precooler and the heat exchanger; a second valve positioned in a second fluid flow path between the condenser and the gas separator; and a third valve positioned in a third fluid flow path extending from the accumulator.

Wherein in a charging mode, the first valve and the second valve are open, and the third valve is closed.

Wherein in an open suppression mode, the first valve, the second valve, and the third valve are open.

Wherein in a closed suppression mode, the first valve and the second valve are closed, and the third valve is open.

Wherein in an idle mode, the first valve, the second valve, and the third valve are closed.

The system further includes a controller electrically coupled to the first valve, the second valve, and the third valve, wherein the controller is configured to open and close the first valve, the second valve, and the third valve.

The system further includes a check valve positioned in a fourth fluid flow path between the gas separator and the accumulator, wherein the check valve is configured to allow fluids to flow from the gas separator to the accumulator.

Wherein the gas separator is configured to receive the bleed air and the cabin exhaust air; and the gas separator is configured to extract the fire suppressing agent from the bleed air and the cabin exhaust air.

Wherein the fire suppressing agent includes an inert gas and a water mist.

Wherein the inert gas is carbon dioxide.

Wherein the gas separator is further configured to use membrane gas separation technology and/or a chemical catalyst reaction.

A system for extinguishing and suppressing a fire in an aircraft includes a first fluid flow path, a second fluid flow path, a third fluid flow path, and a fourth fluid flow path. The first fluid flow path is configured to receive a bleed air from the aircraft. The first fluid flow path extends through a precooler, and ends at a first valve. The second fluid flow path is configured to receive a cabin exhaust air from a passenger cabin of the aircraft. The second fluid flow path extends through a condenser and ends at a second valve. The third fluid flow path has a first branch extending from the first valve and through the heat exchanger and a second branch extending from the second valve. The third fluid flow path further extends through a gas separator into an accumulator, and ends at a third valve. The fourth fluid flow path extends from the third valve.

The system of the preceding paragraph can optionally include, additionally and/or alternatively, any one or more of the following features, configurations and/or additional components:
Wherein in an open suppression mode, the first valve, the second valve, and the third valve are open, and wherein the bleed air is configured to flow along the first fluid flow path and the third fluid flow path, the cabin exhaust air is configured to flow along the second fluid flow path and the third fluid flow path, and a gas suppressing agent is configured to flow along the third fluid flow path and the fourth fluid flow path.

Wherein in a closed suppression fluid mode, the first valve and the second valve are closed and the third valve is open, and wherein a gas suppressing agent is configured to flow through the fourth fluid flow path.

Wherein in a charging fluid mode, the first valve and the second valve are open and the third valve is closed, and wherein the bleed air is configured to flow along the first fluid flow path and the third fluid flow path and the cabin exhaust air is configured to flow along the second fluid flow path and the third fluid flow path.

Wherein in an idle mode, the first valve, the second valve, and the third valve are closed.

A method for extinguishing and suppressing a fire in an aircraft includes receiving a bleed air from the aircraft. The bleed air is cooled with a precooler. A cabin exhaust air is received from a passenger cabin of the aircraft, and the cabin exhaust air is condensed with a condenser. The bleed air and the cabin exhaust air flow into a gas separator. An inert gas and a water mist are separated from the bleed air and the cabin exhaust air using the gas separator. The inert gas and the water mist flow into an accumulator.

The method of the preceding paragraph can optionally include, additionally and/or alternatively, any one or more of the following features, configurations and/or additional components:
The method further includes cooling the bleed air with a heat exchanger, and scrubbing combustion particulates from the bleed air with the heat exchanger.

The method further includes storing the insert gas and the water mist in the accumulator; and releasing the inert gas and the water mist from the accumulator into a cargo bay of the aircraft when a fire is detected in the cargo bay.

While the invention has been described with reference to an exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A system (10) for extinguishing and suppressing a fire in an aircraft, the system (10) comprising:
a precooler (12) configured to receive a bleed air from an engine (11) of the aircraft;
a heat exchanger (14) fluidly coupled with the precooler (12);
a condenser (18) configured to receive a cabin exhaust air from a passenger cabin (16) of the aircraft;
a gas separator (20) fluidly coupled with the condenser (18) and fluidly coupled with the heat exchanger (14), wherein the gas separator (20) is configured to generate a fire suppressing agent from the bleed air and the cabin exhaust air; and
an accumulator (22) fluidly coupled with the gas separator (20), wherein the accumulator (22) is configured to receive and store the fire suppressing agent.

2. The system (10) of claim 1, wherein:
the gas separator (20) is configured to receive the bleed air and the cabin exhaust air; and
the gas separator (20) is configured to extract the fire suppressing agent from the bleed air and the cabin exhaust air.

3. The system (10) of claim 1 or 2, wherein the fire suppressing agent includes an inert gas and a water mist.

4. The system (10) of claim 3, wherein the inert gas is carbon dioxide.

5. The system (10) of any preceding claim, wherein the gas separator (20) is configured to use membrane gas separation technology and/or a chemical catalyst reaction.

6. The system (10) of any preceding claim, further comprising:
a first valve (80) positioned in a first fluid flow path (FP101) between the precooler (12) and the heat exchanger (14);
a second valve (82) positioned in a second fluid flow path (FP102) between the condenser (18) and the gas separator (20); and
a third valve (86) positioned in a third fluid flow path (FP103) extending from the accumulator (22).

7. The system (10) of claim 6, wherein in a charging mode, the first valve (80) and the second valve (82) are open, and the third valve (86) is closed.

8. The system (10) of claim 6 or 7, wherein:
in an open suppression mode, the first valve (80), the second valve (82), and the third valve (86) are open; and/or
in a closed suppression mode, the first valve (80) and the second valve (82) are closed, and the third valve (86) is open.

9. The system (10) of any of claims 6 to 8, further comprising a controller (60) electrically coupled to the first valve (80), the second valve (82), and the third valve (86), wherein the controller (60) is configured to open and close the first valve (80), the second valve (82), and the third valve (86).

10. The system (10) of any of claims 6 to 9, further comprising a check valve (84) positioned in a fourth fluid flow path (FP103) between the gas separator (20) and the accumulator (22), wherein the check valve (84) is configured to allow fluids to flow from the gas separator (20) to the accumulator (22).

11. A system (10) for extinguishing and suppressing a fire in an aircraft, the system comprising:
a first fluid flow path (FP101) configured to receive a bleed air from the aircraft, wherein the first fluid flow path (FP101) extends through a precooler (12) and ends at a first valve (80);
a second fluid flow path (FP102) configured to receive a cabin exhaust air from a passenger cabin (16) of the aircraft, wherein the second fluid flow path (FP102) extends through a condenser (18) and ends at a second valve (82);
a third fluid flow path (FP103) having a first branch extending from the first valve (80) and through a heat exchanger (14), and having a second branch extending from the second valve (82), wherein the third fluid flow path (FP103) further extends through a gas separator (20) into an accumulator (22), and ends at a third valve (86); and
a fourth fluid flow path (FP104) extending from the third valve (86).

12. The system (10) of claim 11, wherein:
in an open suppression mode, the first valve (80), the second valve (82), and the third valve (86) are open, and wherein the bleed air is configured to flow along the first fluid flow path (FP101) and the third fluid flow path (FP103), the cabin exhaust air is configured to flow along the second fluid flow path (FP102) and the third fluid flow path (FP103), and a gas suppressing agent is configured to flow along the third fluid flow path (FP103) and the fourth fluid flow path (FP104);
in a closed suppression fluid mode, the first valve (80) and the second valve (82) are closed and the third valve (86) is open, and a gas suppressing agent is configured to flow through the fourth fluid flow path (FP104); and/or
in a charging fluid mode, the first valve (80) and the second valve (82) are open and the third valve (86) is closed, and wherein the bleed air is configured to flow along the first fluid flow path (FP101) and the third fluid flow path (FP103) and the cabin exhaust air is configured to flow along the second fluid flow path (FP102) and the third fluid flow path (FP103).

13. The system (10) of any of claims 6 to 12, wherein in an idle mode, the first valve (80), the second valve (82), and the third valve (86) are closed.

14. A method for extinguishing and suppressing a fire in an aircraft, the method comprising:
receiving a bleed air from the aircraft;
cooling the bleed air with a precooler (12);
receiving a cabin exhaust air from a passenger cabin (16) of the aircraft;
condensing the cabin exhaust air with a condenser (18);
flowing the bleed air and the cabin exhaust air into a gas separator (20);
separating an inert gas and a water mist from the bleed air and the cabin exhaust air using the gas separator (20); and
flowing the inert gas and the water mist into an accumulator (22).

15. The method of claim 14, further comprising:
cooling the bleed air with a heat exchanger (14) and scrubbing combustion particulates from the bleed air with the heat exchanger (14); and/or
storing the insert gas and the water mist in the accumulator (22) and releasing the inert gas and the water mist from the accumulator (22) into a cargo bay (24) of the aircraft when a fire is detected in the cargo bay (24).
